# EUROPEAN PATENT SPECIFICATION

(11) **EP 1 111 266 B1**
(45) Date of publication and mention of the grant of the patent: **07.04.2004**
(21) Application number: 00311520.1
(22) Date of filing: 21.12.2000
(51) Int. Cl.: F16F 9/516, E05F 3/22, F16F 9/46

(54) **Hydraulic cylinder**
Hydraulikzylinder
Vérin hydraulique

(30) Priority: 23.12.1999 GB 9930552
(43) Date of publication of application: 27.06.2001
(73) Proprietor: TRELLEBORG AB, 231 22 Trelleborg (SE)
(72) Inventor: Tournier, Pascal, 44330 Le Pallet (FR); Charrier, Pierre, 44000 Nantes (FR); Le Tanter, Corinne, 44980 Sainte Luce Sur Loire (FR)
(74) Representative: Foster, David Martyn

(56) References cited:
- DE-A- 3 704 712
- DE-A- 3 830 828
- DE-A- 4 334 007
- DE-C- 4 109 377
- US-A- 4 690 371
- US-A- 5 647 461

## Description

This invention relates to a hydraulic cylinder and more particularly but not exclusively, a hydraulic cylinder for controlling the movement of a movable panel of a vehicle such as a door, bonnet or boot lid, and this in accordance with the preamble of claim 1.

Hydraulic cylinders of this type having a pair of valves, preferably arranged in parallel, are well known for example, from FR 2594473, DE 1459182 or US 4099602. In operation, these cylinders provide varying forces resulting from variations in the surfaces to which fluid pressure is applied.

However, these arrangements are very inconvenient. Typically for example the valves are pre-tensioned using a spring. In this arrangement, once the valve is open, the transistion between the closed position and the open position may result in instabilities because the effort applied by the spring increases with increased opening of the valve.

It is also known to provide a hydraulic cylinder having a stopping mode of operation with serially arranged valves (such arrangements are known from EP 0620345 or FR 2712651). Again these cylinders have instability problems. One solution proposed in' FR 2766887 is particularly complicated and expensive.

According to a first aspect of the invention there is provided a hydraulic cylinder comprising cylinder means, a piston rod extending through a first end of the cylinder means, and a piston carried by the piston rod and sealingly slidable in the cylinder means, the piston dividing the cylinder means into a first fluid-filled chamber containing the cylinder rod, and a second fluid-filled chamber, the piston including first and second valves each having a valve closure sealable against respective valve seats formed in the piston, each valve being operable to allow fluid flow in respectively opposite directions between the first and second chambers in response to a pressure differential between the two chambers, the hydraulic cylinder being characterised in that each valve includes a portion of magnetic material such that each valve is biased into a closed position by magnetic attraction between the valve closure and the respective valve seat, the first valve being arranged to provide an increasing first flow path at the area where the path is reducing between the chambers, as the pressure in the first chamber becomes increasingly higher than the pressure in the second chamber, whereby the resistive force produced by the cylinder resisting movement of the piston rod is generally independent of the velocity of the piston rod.

Embodiments of hydraulic cylinders in accordance with the invention will now be described by way of example with reference to the drawings in which:
Figure 1A is a schematic cross-sectional view of the cylinder;
Figure 1B is an enlarged view of a portion of Figure 1A;
Figure 1C is a sectional view along line A-A of Figure 1A;
Figure 1D is a sectional view along line B-B of Figure 1A;
Figure 2 is a schematic cross-sectional view of the cylinder in its stopping phase of operation with the piston rod being pulled out of the cylinder;
Figure 3 is a schematic cross-sectional view of the cylinder in its stopping phase of movement with the piston rod being pushed into the cylinder;
Figure 4 is a schematic cross-sectional view of the cylinder in a first phase of free movement with the piston rod being pushed into the cylinder;
Figure 5 is a schematic cross-sectional view of the cylinder in a second phase of free movement with the piston rod being pushed into the cylinder;
Figure 6 is a schematic cross-sectional view of the cylinder in a free phase of movement with the piston rod being pulled out of the cylinder;
Figure 7 is a schematic cross-sectional view of the cylinder as it approaches its fully extended state;
Figure 8 is a schematic cross-sectional view of an alternative embodiment of the cylinder which is cheaper to manufacture than the cylinders of the preceding Figures;
Figure 9 is a schematic cross-sectional view of a further alternative embodiment of the cylinder;
Figure 10 is a schematic cross-sectional view of a cylinder having a hydroelastic end stop; and
Figure 11 is a schematic cross-sectional view of a cylinder having an alternative hydroelastic end stop.

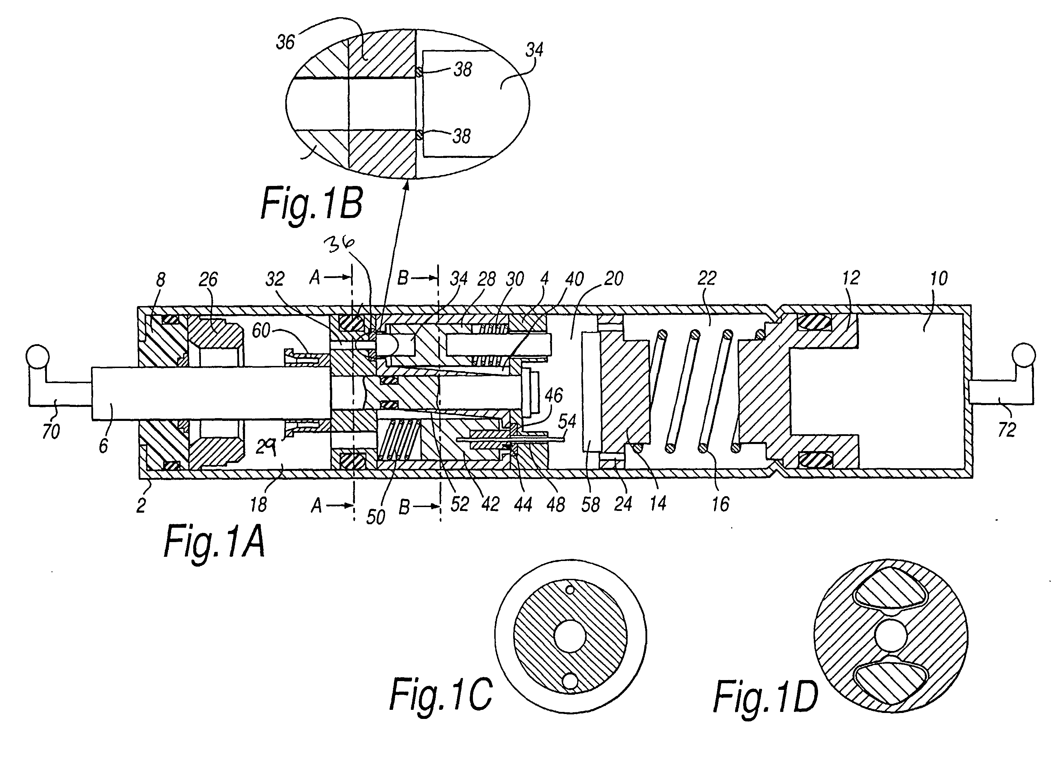

With reference to Figure 1A, the hydraulic cylinder has a cylinder 2 which houses a piston 4 fixed to a piston rod 6. The piston rod 6 slides in a rod guide 8 which also serves to seal a first end of the cylinder 2. At the distal end of the cylinder 2, a gas filled compensation chamber 10 is formed between the distal end of the cylinder 2 and a movable wall 12.

A movable buffer 14 is located between the piston 4 and the movable wall 12. A coil spring 16 biases the movable wall 12 and movable buffer 14 apart so that the movable buffer 14 is biassed generally towards the first end of the cylinder 2.

The cylinder 2 therefore has three hydraulic chambers; a first chamber 18 located between the piston 4 and the first end of the cylinder 2, a second chamber 20 located between the piston 4 and the movable buffer 14, and a third chamber 22 located between the movable buffer 14 and the movable wall 12. Flow passages 24 are provided in the movable buffer 14 to allow generally free axial movement of the movable buffer 14.

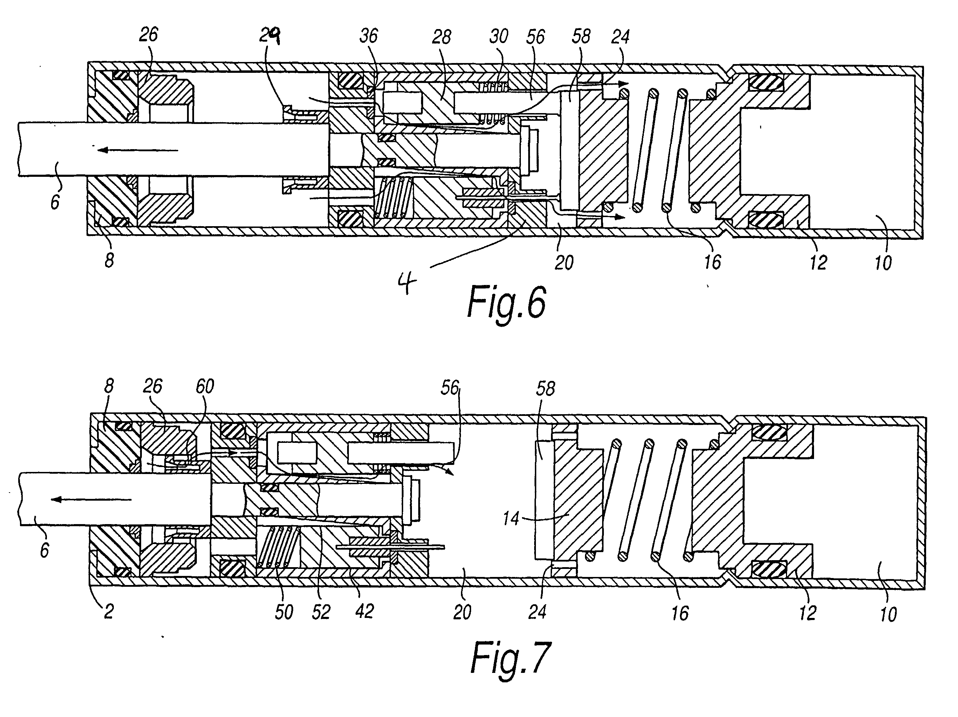

A collar 26 located at the first end of the cylinder 2 cooperates with a damper element 29 to provide damped movement of the piston 4 as it reaches the first end of the cylinder 2. This is shown in operation in Figure 7 and is described in more detail below.

The piston 4 includes two valves. The first valve is formed by a plunger 28 which is weakly biassed by a coil spring 30. The plunger 28 acts as a closure and seals a flow passage 32 formed in the piston 4 when it is in its leftmost position. The plunger 28 includes a portion of magnetic material 34 which is preferably formed by over moulding on to a plastics substrate. Metallic inserts 36 are formed in the piston 4 and serve to attract the magnetic portion 34 of the plunger 28 to provide the main closing force for that valve. The spring 30 balances the force produced by the pressure differential across the plunger 28 when fluid flows through the valve. Sealing elements 38 assist in producing a good seal between the plunger 28 and the piston 4 and also help to reduce noise which may be produced when the valve closes. As the plunger 28 moves to the right in the Figures, fluid flows into the flow passage 32 from the first chamber 18 and out of the valve via a graduated groove 40 and then into the second chamber 20.

The second valve has a similar construction but is configured to operate in the opposite direction. This valve has a plunger 42, a magnetic portion 44, piston inserts 46, a flow passage 48, a biassing spring 50 and a graduated groove 52.

The cylinder is arranged to have two phases of movement. In a first "stopping" phase of movement (when the piston 4 is generally towards the left end of the cylinder 2), the piston 4 remains stationary in the cylinder 2 unless a force above a predetermined threshold (sufficient to open the first or second valve) is applied either to push the piston rod 6 into the cylinder 2 or to pull it out, in which case one or other of the valves opens and allows fluid flow between the first and second chambers 18 and 20 to allow the piston rod 6 to be extended or to enter the cylinder 2. After application of the initial opening force, the force required to maintain the relevant valve open is lower as a result of the non-linear characteristic of the attraction of the magnetic portions 34 and 44 with distance.

In a second "free" phase of movement, (which occurs generally as the piston 4 is towards the right side of the cylinder 2) one or other (or both) of the valves is open and the piston 4 is free to move axially.

The detailed operation of the cylinder will now be described.

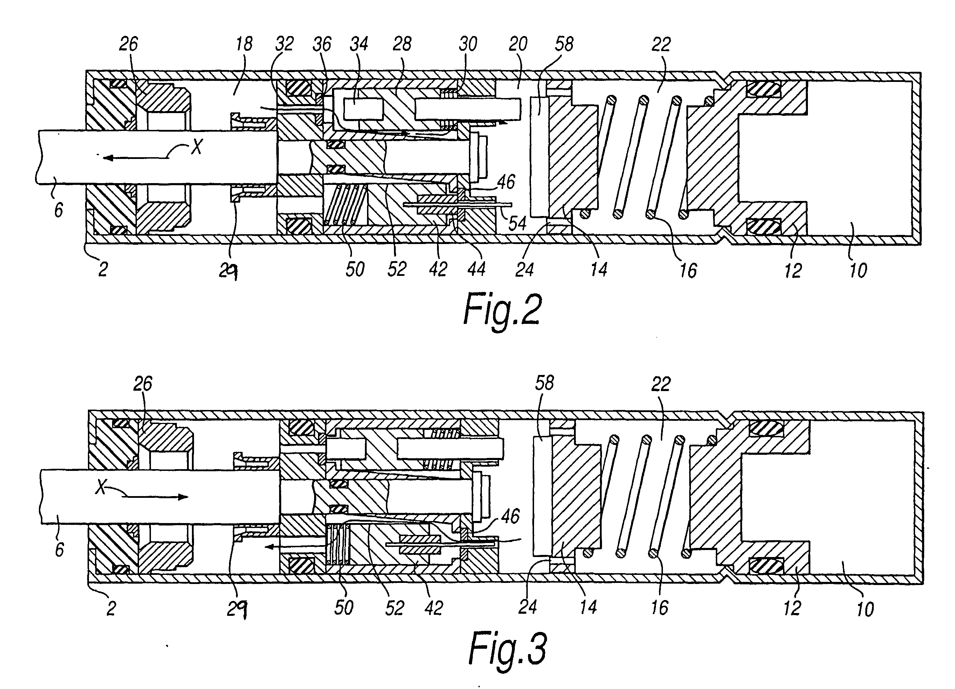

Figure 2 shows the cylinder in its "stopping" mode of operation. A force is being applied to pull the piston rod 6 out of the cylinder 2 as indicated by arrow X. As a result, the pressure in the first chamber 18 is greater than that in the second chamber 20 and the plunger 28 therefore moves to the right and allows fluid to flow through the passage 32 via the graduated groove 40 and into the second chamber 20.

It will be appreciated that if the force X is reduced or removed, the plunger 28 is pushed back to the left in the Figure by the biassing force of spring 30 and also by the magnetic attraction between the portion 34 and the inserts 36. The spring 30 is preferably not pre-compressed and has a weak spring force. The spring 30 may alternatively be pre-compressed with a small pre-load. The final closing force of the valve (when nearly closed) is therefore created by the interaction between the magnetic portion 34 and the inserts 36. The spring 30 is provided largely so that the axial position of the plunger 28 depends on the flow velocity through the valve. This in conjunction with the graduated groove 40 ensures that if the piston rod 6 is pulled quickly out of the cylinder 2, the resistive force of the hydraulic cylinder does not increase excessively. Thus the resistive force is generally independent of the velocity of the movement of the piston rod 6.

Figure 3 shows the operation of the second valve when the piston rod 6 is pushed back into the cylinder 2. The operation of the second valve is the same as that of the first valve albeit in the reverse direction.

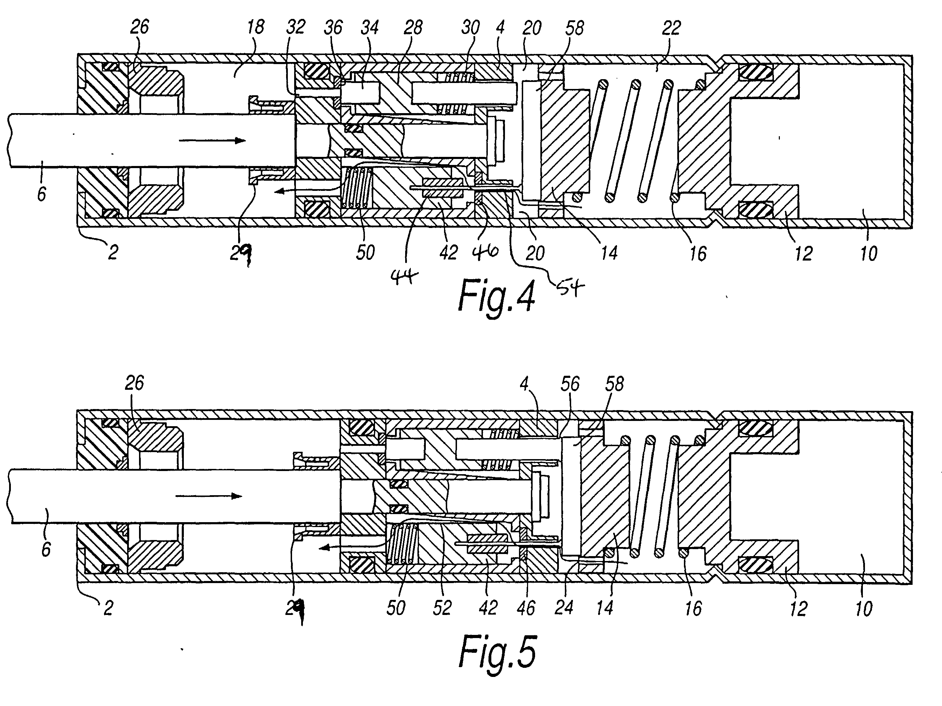

Figure 4 shows the first phase of free movement of the cylinder. As the piston rod 6 is pushed into the cylinder 2, the second valve is opened as described above until eventually the piston 4 becomes very close to the movable buffer 14. The second valve has a projecting member 54 which projects towards the distal end of the cylinder 2. In the position shown in Figure 4, the projecting member 54 has come into contact with the movable buffer 14 and this has resulted in the plunger 42 being held in its open position thereby allowing fluid flow through the second valve from the second chamber 20 to the first chamber 18. This occurs because the spring 16 is stiffer than the spring 50 and the magnetic attraction of magnetic portion 44 is negligible because of its distance from the insert 46.

As further movement of the piston 4 into the cylinder 2 occurs (as shown in Figure 5) a magnetic buffer 56 formed on the first valve, abuts the movable buffer 14 and prevents the piston 4 from coming closer to the movable buffer 14. In this mode of operation, the movement of the piston rod 6 is resisted substantially only by the reactive force of the spring 16. This force can be used to compensate partly for the weight of the vehicle's door which tends to push the piston rod 6 into the cylinder 2.

With reference to Figure 6, as the piston rod 6 is moved in the opposite direction, the' spring 16 travels leftwardly with the piston 4 and ensures that the second valve remains open.

The movable buffer 14 also includes a metallic element 58 and this attracts the magnetic buffer 56 of the first valve. Thus, as the piston rod 6 is pulled out of the cylinder, the plunger 28 of the first valve is also pulled into an open position. The magnetic buffer 56 then operates to hold the piston 4 and movable buffer 14 together at a greater separation than that shown in Figure 5. In this way both valves are opened.

Eventually, the magnetic attraction between the movable buffer 14 and the magnetic buffer 56 is insufficient to draw the movable buffer 14 leftwards and the piston 4 separates from the movable buffer 14. Then, as shown in Figure 7, the second valve closes but the first valve remains open for as long as force is applied to the piston rod 6 to extend it out of the cylinder 2 (as shown in Figure 2).

By arranging for both valves to be opened for a short duration as shown in Figure 6, the transition between the free movement and the "stopping" movement is made smooth.

With reference to Figure 7, a hydraulic damper arrangement at the first end of the cylinder 2 is shown in operation. As discussed above the damper comprises a collar 26 which cooperates with a restricted flow passage 60 in a damper element 29.

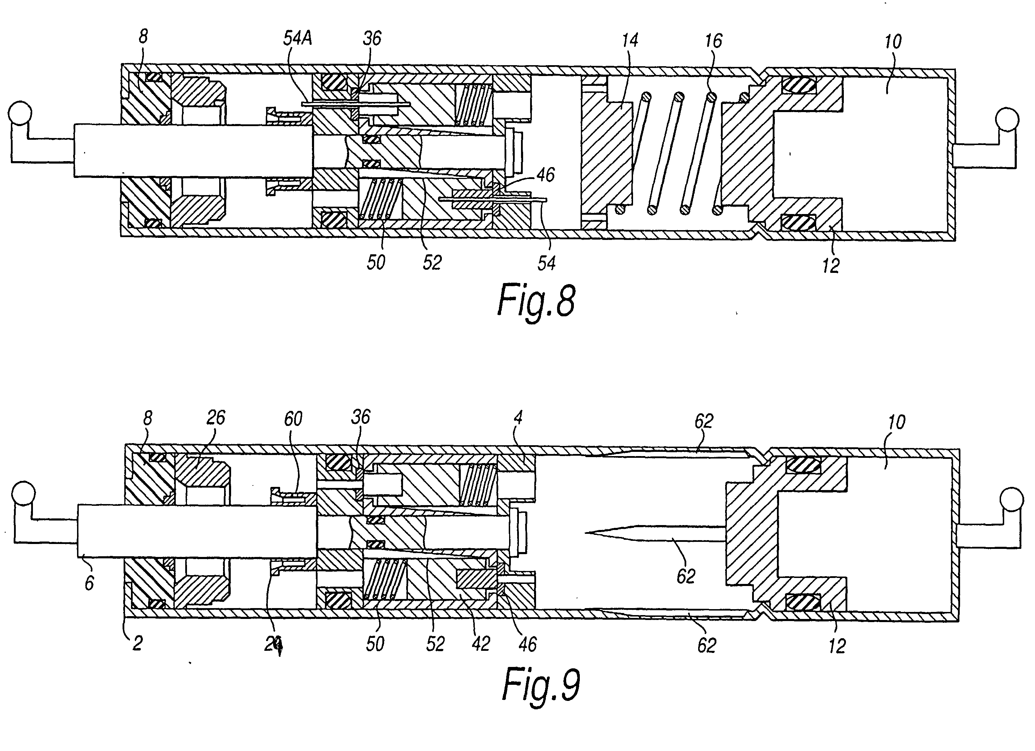

Figure 8 shows an alternative embodiment for the cylinder in which the magnetic buffer 56 is omitted. The first and second valves are identical in construction (although reversed in orientation). This provides a functional cylinder but this arrangement does not have a smooth transition between the free and stopping phases of movement.

Figure 9 shows a further alternative embodiment in which the movable buffer 14 and spring 16 have been omitted. In their place, grooves 62 are formed in the internal surface of the cylinder 2. These provide a bypass flow path around the piston when the piston is near the distal end of the cylinder 2. This thus provides the free phase of movement.

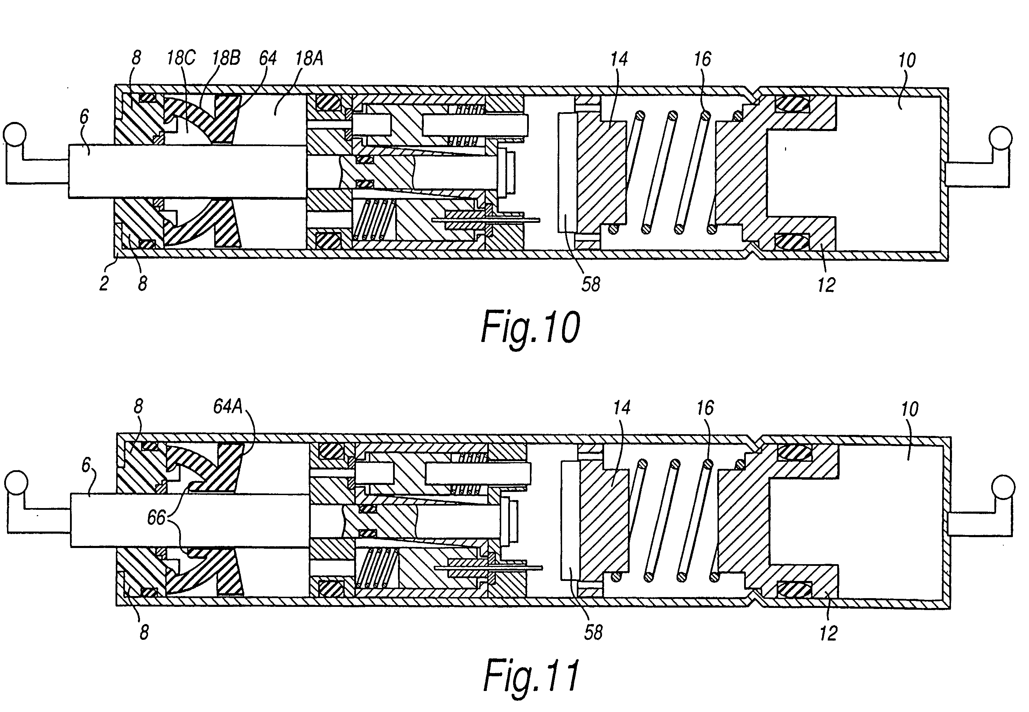

Figure 10 shows an embodiment which is similar to that of Figures 1 to 7. However, the hydraulic damper formed by the collar 26 and the restricted flow passage 60 has been replaced by a hydroelastic buffer 64 made of elastomeric material. The elastomeric buffer divides the first chamber 18 into three chambers 18A between the buffer 64 and the piston, 18B, defined between the buffer and the interior wall of the cylinder 2 and 18C defined between the buffer 64 and the piston rod 6. Fluid flows between these chambers by virtue of play between the piston rod 6 and the buffer and also between the buffer and the cylinder. It will be noted that the loss of hydraulic pressure increases with compression of the buffer because the gaps are reduced.

During compression of the buffer 64 the compressive force is resisted by the spring force of the elastomeric material, the pressurization of the fluid within the chambers 18B and 18C and the damping force generated by the loss of hydraulic pressure as fluid leaks through the gaps between the buffer 64 and the cylinder 2 and rod 6. It will be noted that at low piston speeds, the fluid has an opportunity to leak out of the chambers 18B and 18C back into the chamber 18A. Thus the damping force provided by the buffer 64 increases if the speed of impact of the piston 4 into the buffer is high.

Figure 11 shows a further alternative in which the hydroelastic buffer 64A includes a projection 66 which limits the axial movement of a hydroelastic buffer 64A towards the first end of the cylinder 2.

The cylinder also includes fixings 70 and 72 on the piston rod 6 and the cylinder 2 respectively. One or both of these are arranged to break in the event of a crash or if the cylinder becomes blocked, so that the door or other movable panel of the vehicle may still be opened.

## Claims

1. A hydraulic cylinder comprising cylinder means (2), a piston rod (6) extending through a first end of the cylinder means (2), and a piston (4) carried by the piston rod (6) and sealingly slidable in the cylinder means (2), the piston (4) dividing the cylinder means (2) into a first fluid-filled chamber (18) containing the piston rod (6), and a second fluid-filled chamber (2), the piston (4) including first and second valves each having a valve closure (28, 42) sealable against respective valve seats (36, 46) formed in the piston (4), each valve being operable to allow fluid flow in respectively opposite directions between the first (18) and second (20) chambers in response to a pressure differential between the two chambers (18, 20), the hydraulic cylinder being **characterised in that** each valve includes a portion (34, 44) of magnetic material such that each vale is biased into a closed position by magnetic attraction between the valve closure (28, 42) and the respective valve seat (36, 46) the first valve being arranged to provide an increasing first flow path (32, 40) at the area where the path is reducing, between the chambers (18, 20), as the pressure in the first chamber (18) becomes increasingly higher than the pressure in the second chamber (20), whereby the resistive force produced by the cylinder resisting movement of the piston rod (6) is generally independent of the velocity of the piston rod (6).

2. A cylinder according to claim 1, wherein the first restricted flow path (32, 40) is formed in the piston (4) as a generally elongate groove (4) of varying cross-sectional area and through which fluid flows when the first valve is open, and wherein the first valve is arranged progressively to expose the groove (40) as the pressure differential between the first and second chambers (18,20) increases.

3. A cylinder according to claim 1 or claim 2, wherein the second valve is arranged to provide an increasing second flow path (48, 52) at the area where the path is reducing (52) between the chambers (18,20), as the pressure in the second chamber (20) becomes increasingly higher than the pressure in the first chamber (18), whereby the resistive force produced by the cylinder resisting movement of the piston rod (6) is generally independent of the velocity of the piston rod (6).

4. A cylinder according to claim 3, wherein the second restricted flow path (48, 52) is formed in the piston (4) as a generally elongate groove (52) of varying cross-sectional area and through which fluid flows when the second valve is open, and wherein the second valve is arranged progressively to expose the groove (52) as the pressure differential between the second and first chambers (18, 20) increases.

5. A cylinder according to any preceding claims including a movable buffer (14) axially moveable in the second chamber (20) and biased towards the piston (4), and the second valve including a second valve control member (54) projecting towards the movable buffer (14), the control member (54) being operable to open the second valve when it comes into contact with the movable buffer (14).

6. A cylinder according to claim 5, wherein the first valve includes a first valve control member (56) extending towards the moveable buffer (14), which is operable to open the first valve as it moves towards the moveable buffer (14) and which is magnetically attracted to the movable buffer (14).

7. A cylinder according to any one of claims 1 to 4, including groove means (62) formed in the interior surface of the cylinder means (2) generally at the distal end of the cylinder means (2) and arranged to form a flow path which bypasses the piston (4) when the piston (4) is generally at the said distal end.

8. A cylinder according to any preceding claim, including a gas-filled compensation chamber (10) defined by an axially moveable wall (12) sealingly engaging the interior surface of the cylinder means (2) at the distal end thereof.

9. A cylinder according to any preceding claim, including hydraulic damping means (26,29) arranged to bring the piston (4) to a controlled halt when it reaches the first end of the cylinder means (2).

10. A cylinder according to any one of claims 1 to 8, including hydroelastic damping means (64) arranged to bring the piston (4) to a controlled halt when it reaches the first end of the cylinder means (2).

11. A cylinder according to any preceding claims, including fixing means (70, 22) formed on the piston rod (6) and/or the distal end of the cylinder means (2), and wherein one or both of the fixing means (70, 72) are arranged to separate from the cylinder if a force above a predetermined threshold is applied between the fixing means (70, 72).

## Patentansprüche

1. Hydraulikzylinder, der eine Zylindereinrichtung (2), eine Kolbenstange (6), die sich durch ein erstes Ende der Zylindereinrichtung (2) hindurcherstreckt, und einen Kolben (4) umfasst, der von der Kolbenstange (6) getragen wird und dichtend in der Zylindereinrichtung (2) gleiten kann, wobei der Kolben (4) die Zylindereinrichtung (2) in eine erste fluidgefüllte Kammer (18), die die Kolbenstange (6) enthält, und eine zweite fluidgefüllte Kammer (20) unterteilt, und der Kolben (4) ein erstes sowie ein zweites Ventil enthält, die jeweils einen Ventilverschluss (28, 42) haben, der an entsprechenden Ventilsitzen (36, 46) abdichten kann, die in dem Kolben (4) ausgebildet sind, jedes Ventil so betätigt werden kann, dass es Fluidstrom in jeweils entgegengesetzte Richtungen zwischen der ersten (18) und der zweiten (20) Kammer in Reaktion auf einen Druckunterschied zwischen den zwei Kammern (18, 20) zulässt, wobei der Hydraulikzylinder **dadurch gekennzeichnet ist, dass** jedes Ventil einen Abschnitt (34, 44) aus Magnetmaterial enthält, so dass jedes Ventil durch magnetische Anziehung zwischen dem Ventilverschluss (28, 42) und dem entsprechenden Ventilsitz (36, 46) in eine geschlossene Position gespannt wird, wobei das erste Ventil so eingerichtet ist, dass es einen zunehmenden ersten Strömungsweg (32, 40) an dem Bereich bildet, an dem sich der Weg zwischen den Kammern (18, 20) verringert, wenn der Druck in der ersten Kammer (18) zunehmend höher wird als der Druck in der zweiten Kammer (20), so dass die Widerstandskraft, die von dem Zylinder erzeugt wird und Bewegung der Kolbenstange (6) Widerstand entgegensetzt, im Allgemeinen unabhängig von der Geschwindigkeit der Kolbenstange (6) ist.

2. Zylinder nach Anspruch 1, wobei der erste verengte Strömungsweg (32, 40) in dem Kolben (4) als eine im Allgemeinen längliche Nut (4) mit sich verändemder Querschnittsfläche ausgebildet ist, durch die Fluid strömt, wenn das erste Ventil offen ist, und wobei das erste Ventil so eingerichtet ist, dass es die Nut (40) zunehmend freilegt, wenn der Druckunterschied zwischen der ersten und der zweiten Kammer (18, 20) ansteigt.

3. Zylinder nach Anspruch 1 oder Anspruch 2, wobei das zweite Ventil so eingerichtet ist, dass es einen sich vergrößernden zweiten Strömungsweg (48, 52) an dem Bereich aufweist, an dem sich der Weg zwischen den Kammern (18, 20) verringert (52), wenn der Druck in der zweiten Kammer (20) zunehmend größer wird als der Druck in der ersten Kammer (18), so dass die durch den Zylinder erzeugte Widerstandskraft, die Bewegung der Kolbenstange (6) Widerstand entgegensetzt, im Allgemeinen unabhängig von der Geschwindigkeit der Kolbenstange (6) ist.

4. Zylinder nach Anspruch 3, wobei der zweite verengte Strömungsweg (48, 52) in dem Kolben (4) als eine im Allgemeinen längliche Nut (52) mit sich verändemder Querschnittsfläche ausgebildet ist, durch die Fluid strömt, wenn das zweite Ventil offen ist, und wobei das zweite Ventil so eingerichtet ist, dass es die Nut (52) zunehmend freilegt, wenn der Druckunterschied zwischen der ersten und der zweiten Kammer (18, 20) zunimmt.

5. Zylinder nach einem der vorangehenden Ansprüche, der einen beweglichen Puffer (14) enthält, der axial in der zweiten Kammer (20) bewegt werden kann und auf den Kolben (4) zu gespannt wird, und wobei das zweite Ventil ein zweites Ventil-Steuerelement (54) enthält, das auf den beweglichen Puffer (14) zu vorsteht, wobei das Steuerelement (54) so betätigt werden kann, dass es das zweite Ventil öffnet, wenn es mit dem beweglichen Puffer (14) in Kontakt kommt.

6. Zylinder nach Anspruch 5, wobei das erste Ventil ein erstes Ventil-Steuerelement (56) enthält, das sich auf den beweglichen Puffer (14) zu erstreckt und so betätigt werden kann, dass es das erste Ventil öffnet, wenn es sich auf den beweglichen Puffer (14) zu bewegt, und das magnetisch von dem beweglichen Puffer (14) angezogen wird.

7. Zylinder nach einem der Ansprüche 1 bis 4, der eine Nuteinrichtung (62) enthält, die in der Innenfläche der Zylindereinrichtung (2) im Allgemeinen am vorderen Ende der Zylindereinrichtung (2) ausgebildet und so eingerichtet ist, dass sie einen Strömungsweg bildet, der den Kolben (4) umgeht, wenn sich der Kolben (4) im Allgemeinen an dem vorderen Ende befindet.

8. Zylinder nach einem der vorangehenden Ansprüche, der eine gasgefüllte Ausgleichskammer (10) enthält, die durch eine axial bewegliche Wand (12) gebildet wird, die dichtend mit der Innenfläche der Zylindereinrichtung (2) am vorderen Ende derselben in Eingriff kommt.

9. Zylinder nach einem der vorangehenden Ansprüche, der eine hydraulische Dämpfeinrichtung (26, 29) enthält, die so eingerichtet ist, dass sie den Kolben (4) gesteuert zum Halten bringt, wenn er das erste Ende der Zylindereinrichtung (2) erreicht.

10. Zylinder nach einem der Ansprüche 1 bis 8, der eine hydroelastische Dämpfeinrichtung (64) enthält, die so eingerichtet ist, dass sie den Kolben (4) gesteuert zum Halten bringt, wenn er das erste Ende der Zylindereinrichtung (2) erreicht.

11. Zylinder nach einem der vorangehenden Ansprüche, der Befestigungseinrichtungen (70, 22) enthält, die an der Kolbenstange (6) und/oder dem vorderen Ende der Zylindereinrichtung (2) ausgebildet sind, und wobei eine oder beide Befestigungseinrichtungen (70, 72) so eingerichtet sind, dass sie sich von dem Zylinder trennen, wenn eine Kraft über einem vorgegebenen Schwellenwert zwischen den Befestigungseinrichtungen (70, 72) ausgeübt wird.

## Revendications

1. Vérin hydraulique comprenant des moyens formant vérin (2), une tige de piston (6) s'étendant à travers une première extrémité des moyens formant vérin (2) et un piston (4) supporté par la tige de piston (6) et pouvant coulisser de façon étanche dans les moyens formant vérin (2), le piston (4) séparant les moyens formant vérin (2) en une première chambre remplie de fluide (18) contenant la tige de piston (6) et en une seconde chambre remplie de fluide (2), le piston (4) comprenant une première et une seconde valves, ayant chacune une fermeture de valve (28, 42) scellable contre les sièges de valve respectifs (36, 46) formés dans le piston (4), chaque valve pouvant être actionnée pour permettre au fluide de s'écouler dans des directions respectivement opposées entre la première (18) et la seconde (20) chambres en réponse à une pression différentielle entre les deux chambres (18, 20), le vérin hydraulique étant **caractérisé en ce que** chaque valve comprend une partie (34, 44) de matière magnétique de telle sorte que chaque valve est inclinée dans une position fermée par l'attraction magnétique entre la fermeture de valve (28, 42) et le siège de valve respectif (36, 46), la première valve étant conçue pour fournir un premier trajet d'écoulement croissant (32, 40) au niveau de la zone où le trajet se réduit, entre les chambres (18, 20), au fur et à mesure que la pression dans la première chambre (18) devient plus élevée que la pression dans la seconde chambre (20), moyennant quoi la force résistive produite par le mouvement de résistance de la tige de piston (6) du vérin est généralement indépendante de la vitesse de la tige de piston (6).

2. Vérin selon la revendication 1, dans lequel le premier trajet d'écoulement limité (32, 40) est formé dans le piston (4) sous la forme d'une gorge généralement allongée (4) de section variable et à travers laquelle s'écoule le fluide lorsque la première valve est ouverte, et dans lequel la première valve est progressivement agencée pour exposer la gorge (40) au fur et à mesure que la pression différentielle entre la première et la seconde chambres (18, 20) augmente.

3. Vérin selon la revendication 1 ou 2, dans lequel la seconde valve est agencée pour fournir un second trajet d'écoulement croissant (48, 52) au niveau de la zone où le trajet se réduit (52) entre les chambres (18, 20), au fur et à mesure que la pression dans la seconde chambre (20) devient progressivement plus élevée que la pression dans la première chambre (18), moyennant quoi la force résistive produite par le mouvement de résistance de la tige de piston (6) du vérin est généralement indépendante de la vitesse de la tige de piston (6).

4. Vérin selon la revendication 3, dans lequel le second trajet d'écoulement limité (48, 52) est formé dans le piston (4) sous la forme d'une gorge généralement allongée (52) de section variable et à travers laquelle s'écoule le fluide lorsque la seconde valve est ouverte, et dans lequel la seconde valve est progressivement agencée pour exposer la gorge (52) au fur et à mesure que la pression différentielle entre la première et la seconde chambres (18, 20) augmente.

5. Vérin selon l'une quelconque des revendications précédentes, comprenant un tampon mobile (14) pouvant être déplacé dans le sens axial dans la seconde chambre (20) et incliné vers le piston (4), et la seconde valve comprenant un second élément de commande de valve (54) se projetant vers le tampon mobile (14), l'élément de commande (54) pouvant être actionné pour ouvrir la seconde valve lorsqu'elle vient en contact avec le tampon mobile (14).

6. Vérin selon la revendication 5, dans lequel la première valve comprend un premier élément de commande de valve (56) s'étendant vers le tampon mobile (14), qui peut être actionné pour ouvrir la première valve lorsqu'elle se déplace vers le tampon mobile (14) et qui est magnétiquement attiré vers le tampon mobile (14).

7. Vérin selon l'une quelconque des revendications 1 à 4, comprenant des moyens formant gorge (62) formés dans la surface interne des moyens formant vérin (2), généralement à l'extrémité distale des moyens formant vérin (2) et agencés pour former un trajet d'écoulement qui contourne le piston (4) lorsque le piston (4) est généralement à ladite extrémité distale.

8. Vérin selon l'une quelconque des revendications précédentes, comprenant une chambre de compensation remplie de gaz (10) définie par une paroi mobile dans le sens axial (12) en prise de façon étanche avec la surface intérieure des moyens formant vérin (2) au niveau de l'extrémité distale de ceux-ci.

9. Vérin selon l'une quelconque des revendications précédentes, comprenant des moyens amortisseurs hydrauliques (26, 29) agencés pour amener le piston (4) dans une position d'arrêt contrôlé lorsqu'il atteint la première extrémité des moyens formant vérin (2).

10. Vérin selon l'une quelconque des revendications précédentes 1 à 8, comprenant des moyens amortisseurs hydroélastiques (64) agencés pour amener le piston (4) dans une position d'arrêt contrôlé lorsqu'il atteint la première extrémité des moyens formant vérin (2).

11. Vérin selon l'une quelconque des revendications précédentes, comprenant des moyens de fixation (70, 22) formés sur la tige de piston (6) et/ou l'extrémité distale des moyens formant vérin (2), et dans lequel un ou les deux moyens de fixation (70, 72) sont agencés pour assurer une séparation par rapport au vérin si une force dépassant un seuil prédéterminé est appliquée entre les moyens de fixation (70, 72).
